# EUROPEAN PATENT SPECIFICATION

(11) **EP 2 355 421 B1**
(45) Date of publication and mention of the grant of the patent: **22.08.2012**
(21) Application number: 10360004.5
(22) Date of filing: 20.01.2010
(51) Int. Cl.: H04L 12/56, H04W 36/02

(54) **Data processing**
Datenverarbeitung
Traitement de données

(43) Date of publication of application: 10.08.2011
(73) Proprietor: Alcatel Lucent, 75007 Paris (FR)
(72) Inventor: Wang, Yalou, Swindon, SN5 5UG (GB)
(74) Representative: Sarup, David Alexander

(56) References cited:
- EP-A1- 2 131 600
- US-A1- 2009 086 677

## Description

### FIELD OF THE INVENTION

The present invention relates to a method of processing a flow of data packets in a wireless telecommunications network, a network node or base station operable to carry out that method and a computer program product.

### BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In known wireless telecommunication systems, user equipment can move between geographical base station coverage areas. Service provided to user equipment is overseen by a mobility management entity (MME). The MME communicates with user equipment, serving gateways and base stations and determines which base station each user equipment is served by. Furthermore, the MME acts to control and communicate with serving gateways, base stations and user equipment when user equipment moves from the geographical area served by one base station to a geographical area served by another base station.

Movement between sectors provided by a single base station and movement between coverage areas, that is to say movement between base stations whilst user equipment is in an active state are known as "mobility events" or "handover" and are overseen by the MME.

When user equipment is in an active state, data is being sent to a core network via a base station and data is being sent from the core network to user equipment via a base station.

When active user equipment moves from an area served by one base station (a "source" base station) into an area served by another base station (a "target" base station), data packets for that user equipment being streamed from the core network via an Evolved Packet Core (EPC) are no longer sent to the source base station and instead are sent to the target base station. In order to try to ensure all data packets in a data stream reach the intended user equipment, if the source base station is aware that handover is occurring, the source base station operates to forward data packets that it has received from the core network to the target base station. The target base station then acts to send those forwarded data packets to the user equipment once the handover process is complete.

In the target base station there will therefore be two data streams: a forwarded data stream from the source base station and a new data stream from the EPC sent directly to the target base station once handover signalling is complete. The target base station acts to buffer the two data streams until data packet transmission to user equipment by the target base station starts after handover. Once handover to the target base station is complete, the stream of forwarded data packets is processed and transmitted to user equipment, followed by the new data packet stream.

It will be appreciated that to process the two streams most efficiently and with minimal handover interruption to the user equipment, the target base station requires some indication as to when the forwarded data stream has ended so that the delay before commencing transmission of the new data packet stream is minimized.

EP 2131600 discloses a handover method in which a predetermined timer is activated at a handover target radio base station when a path switch request is transmitted. User data for a mobile station is stored until the predetermined timer expires, then the stored data is sent to the mobile station after the timer expires. In an embodiment the predetermined timer is set individually for each QoS of user data.

US 2009/0086677 discloses methods of managing effects of discarded service data units during handover and maintaining an order of data packets when user equipment encounters a lost data packet. The document describes how in-order delivery of data packets may be achieved during handover by requiring that a target base station waits for a predetermined time limit before transmitting new data pockets.

It is desired to improve the performance of data processing during inter base station handover processes.

### SUMMARY

Accordingly, a first aspect provides a method of processing a flow of data packets in an inter base station handover process in a wireless telecommunications network, said flow of data comprising a first stream of data packets to be transmitted to user equipment and a second stream of data pockets to be transmitted to said user equipment after said first stream of data packets, said method comprising the steps of:
receiving data packets belonging to said first stream:
   transmitting said received data packets belonging to said first stream to said user equipment;
   receiving data packets belonging to said second stream:
   waiting for o predetermined buffer period from receipt of a first data packet in said second stream, before transmitting said received data packets belonging to said second stream to said user equipment.
   said predetermined buffer period being selected on the basis of flow characteristics of the flow of data packets;
   monitoring, during said predetermined buffer period, for receipt of a further data pocket belonging to said first stream:
      and, if a further data packet is received,
      calculating a new buffer period by multiplying said predetermined buffer period by a scaling factor, said scaling factor being selected based upon flow characteristics of said flow of data packets and waiting said calculated new buffer period from time of receipt of said further data packet before transmitting said received data packets belonging to said second stream to said user equipment.

In order for a target base station to process a forwarded data stream and a new data stream and forward that data to user equipment in the correct order whilst minimizing handover interruption, it is possible to arrange for an end marker to be sent at the end of the forwarded data packet stream. The end marker may be a special packet, which does not contain user data, sent by a serving gateway from the core network. When the target base station receives the end packet, it knows the forwarded stream has ended and that it can then commence transmission of the new data stream.

However, such an approach can prove problematic: sometimes the end marker does not exist or does not reach the target base station. This may be because an end marker is only sent when there is no change in SGW between source and target base stations. When there is a change of serving gateway between source base station and target base station, no end marker is present. Furthermore, even if an end marker is produced, it may be lost in the data forwarding path due to transport network pocket loss.

If no end marker can be relied upon to be present at the end of a forwarded data packet stream, a target base station may not know accurately when to begin transmission of the new data stream. It will be appreciated that the timing of the end of a forwarded data stream may be particularly difficult due to the very nature of IP data transport which is open to variable delay and congestion in the transport network.

It is possible, therefore, for a base station to start a waiting period in response to receipt of the first data packet in a new data stream, and wait for that period before transmitting the new data stream to user equipment. In this way, the target base station allows that waiting time for data in the forwarded stream to arrive and be transmitted to user equipment before the new data stream is transmitted. The specific wait period may be left to field implementation optimisation and the value of the wait period is universal to any type of data passing through that target base station. Furthermore, it will be appreciated that, even if the forwarded data stream has been completely received before the first packet of the new data stream, the target base station will implement the wait period, and the service to user equipment is not optimised.

The first aspect recognises that the waiting period delay could advantageously be adapted based upon the type of data being carried in the data packets, and more specifically, based upon the flow characteristics, including, for example, jitter, arrival pattern, and expected, or allowable, delay for the type of data being carried in the data packets.

In particular, the wait period may be allocated according to a Quality of Service Class Index (QCI) setting, rather than being universal. QCI is a parameter which describes possible user application flow characteristics. QCI of a data flow can be used by a base station to handle the data stream accordingly.

For applications which are delay sensitive, for example, conversational voice or video over IP, which has a QCI of 1 or 2, the waiting period may be set to minimal, or even zero, so that the delay in forwarding data packets to the user equipment is minimised. For other applications, having a non-delay sensitive QCI, preventing packet loss is considered more important than prevention of delay and the waiting period can therefore be set to be relatively large.

It can therefore be seen that the first aspect can dynamically adapt data processing of a base station during hard handover, in response to the type of data being handled, to optimise service to a user.

By monitoring for receipt of any further data packets belonging to the first, forwarded, stream during a waiting period, the response of the base station can be adapted to suit network conditions. If the network is experiencing considerable delay or congestion, packets of data forming part of the first data stream may be received by a target base station significantly later than initially expected. In such a case, monitoring for receipt of late forwarded data packets during a wait period can help to ensure that those forwarded data packets are forwarded before new packets belonging to the second stream. Such an arrangement may, for example, be particularly useful for non delay-sensitive data being carried in data pockets, for which prevention of packet loss is more significant than prevention of delay.

The new buffer period is calculated by multiplying the predetermined buffer period by a scaling factor, the scaling factor being selected based upon flow characteristics of the flow of data packets.

Accordingly, it will be understood that an iterative process of monitoring and waiting may be implemented based upon characteristics of the data flow. In particular, it will be appreciated that it may be possible to iterate, or scale, the waiting periods such that the waiting period converges rapidly. Each new calculated waiting period may, for example, comprise the previous waiting period multiplied by a scaling factor. That scaling factor may be related to the flow characteristics of the data flow. It will therefore be appreciated that an iterative process may be implemented, wherein the steps of monitoring for receipt of a late data packet belonging to the first data stream may be repeated during each buffer period, and the recalculation of a new buffer waiting period is based upon the scaling factor multiplied by the immediately preceding buffer period.

For example, for data streams having a QCI of 1 or 2, those are delay-sensitive application flows and data packet arrival follows a fixed pattern (for example, 20ms interval for QCII stream), the scaling factor may be zero, such that even if a late data packet from the first, forwarded, stream is received, there is no further waiting before transmission of the second data stream to user equipment. For other delay-sensitive data types the scaling factor may be less than 1 to achieve fast convergence. For non delay-sensitive QCI data the scaling factor may be greater than 1 so that transport delay or congestion in the network can be well accommodated.

In one embodiment, the method further comprises the steps of:
determining an expected time difference between receipt of a last packet of the first data stream and a first data packet of the second data stream; and
setting said predetermined buffer period on the basis of flow characteristics of the flow of data packets and the expected time difference.

Accordingly, it will be appreciated that when commissioning a wireless telecommunications network it is likely that, for a given pair of network nodes, and in particular a given pair of base stations, a forwarded data steam and a new data stream are likely to normally follow an established data transport path. It is therefore possible to evaluate, when commissioning a system, a likely time difference between a final packet of a forwarded data stream and a first data packet of a new data stream. That evaluation may be made using an engineering approach or by using a constant application data stream test in a normal loaded network. It will be appreciated that the typical time difference will depend upon data type and therefore data flow characteristics, since the IP network transports different data according to their different priorities.

In some cases it may be found that a forwarded data stream has a smaller delay than the new data stream. In such a situation, the final packet of a forwarded data stream is likely to arrive at a target base station before a first packet of a new data stream. That situation may be known as a "positive delta" time system.

It may also be found that a forwarded data stream has a greater delay than the new data stream. In such a situation, the final packet of a forwarded data stream is likely to arrive at a target base station after a first packet of a new data stream. That situation may be known as a "negative delta" time system.

It will be appreciated that if it is expected that the final packet of a forwarded data stream will be received before a first data packet of a new data stream, the predetermined buffer period which may be implemented may be shorter, thereby offering the potential for minimised disruption to an end user.

It will be appreciated that the expected time difference may vary according to the data type being carried by the data flow, and the flow characteristics of that data.

In one embodiment, the method comprises the step of:
comparing the expected time difference with the time of receipt of an apparent final packet of the first stream, in order to determine whether that apparent packet is likely to be the final packet in said first stream.

In one embodiment, the method further comprises the steps of:
comparing the expected time difference with the predetermined buffer period and if the expected time difference is less than the predetermined buffer period, immediately transmitting data packets belonging to the second stream to the user equipment.

Accordingly, if on IP transport network is operating better than might be expected, or if the buffer period for that data flow type is set appropriately such that no further delay can be tolerated, it may be possible to bypass a buffer period entirely and transmit data packets belonging to the second data stream without implementing a predetermined buffer period.

In one embodiment, the method further comprises the steps of:
determining whether there is an expectation that a last packet of the first data stream will be received before a first data packet of the second data stream: and
setting the predetermined buffer period accordingly.

In one embodiment, if there is an expectation that a last packet of the first data stream will be received before a first data packet of the second data stream, the method further comprises the steps of:
calculating, based on timestamps allocated to the last packet of the first data stream and the first data packet of the second data stream, an actual time difference between the last packet of the first data stream and the first data packet of the second data stream, and using the actual time difference in place of the expected time difference.

Accordingly, it will be appreciated that in a positive time delta system, it is possible to use an actual time difference, rather than an expected time difference based upon an application data stream test. Such an approach may lead to a further minimised delay between transmission of the first data stream and the second data stream.

In one embodiment, if there is an expectation that a last packet of the first data stream will be received before a first data packet of the second data stream, the method further comprises the step of:
modifying the step of waiting for a predetermined buffer period to wait for a predetermined buffer period from receipt of a last data packet in the first stream before transmitting the received data packets belonging to the second stream to user equipment.

Accordingly, in a positive time delta system, it will be appreciated that it may be possible to minimise the buffer period by implementing a start time based upon a last data packet received in the first, forwarded, stream, rather than wait for a first packet in the new stream to start the timer. Such an approach allows for further minimisation of possible delay between transmission of streams.

A second aspect provides a computer program product operable, when executed on a computer, to perform a method according to any embodiment of the first aspect.

A third aspect provides a network node operable to process a flow of data packets in an inter base station handover process in a wireless telecommunications network, said flow of data comprising a first stream of data packets to be transmitted to user equipment and a second stream of data packets to be transmitted to said user equipment ofter said first stream of data packets, said network node comprising:
reception logic operable to receive data packets belonging to said first stream and said second stream:
   transmission logic operable to transmit said received data packets belonging to said first stream and said second stream to said user equipment:
   processing logic operable to wait for a predetermined buffer period from receipt of a first data packet in said second stream, before transmitting said received data packets belonging to said second stream to user equipment,
   said predetermined buffer period being selected on the basis of flow characteristics of said flow of data packets;
   monitoring logic operable to monitor, during said predetermined buffer period.
      for receipt of a further data packet belonging to said first stream;
   and,
   calculation logic operable, calculation logic is operable, if a further data packet is received, to calculate a new buffer period by multiplying said predetermined buffer period by a scaling factor, said scaling factor being selected based upon flow characteristics of said flow of data packets:
      wherein said processing logic is operable to wait said calculated new buffer period from time of receipt of said further data packet before transmitting said received data packets belonging to said second stream to said user equipment.

In one embodiment, the network node is a base station.

In one embodiment, the network node further comprises:
determination logic operable to determine an expected time difference between receipt of a lost packet of the first data stream and a first data pocket of the second data stream: and
wherein the processing logic is operable to set the predetermined buffer period on the basis of flow characteristics of the flow of data packets and the expected time difference.

In one embodiment, the network node further comprises:
comparison logic operable to compare the expected time difference to the predetermined buffer period and, if the expected time difference is less than the predetermined buffer period, operable to immediately transmit data packets belonging to said second stream to the user equipment.

In one embodiment, the network node further comprises:
delta determination logic operable to
determine whether there is an expectation that a last packet of the first data stream will be received before a first data packet of the second data stream: and
set the predetermined buffer period accordingly.

In one embodiment, if there is an expectation that a last packet of the first data stream will be received before a first data packet of the second data stream, the method further comprises the steps of:
calculating, based on timestamps allocated to a last packet of the first data stream and a first data packet of the second data stream, an actual time difference between the last packet of the first data stream and the first data packet of the second data stream, and using the actual time difference in place of the expected time difference.

In one embodiment, if there is an expectation that a last packet of the first data stream will be received before a first data packet of the second data stream, the method further comprises the step of:
modifying the step of waiting for a predetermined buffer period to wait for a predetermined buffer period from receipt of a last data packet in the first stream before transmitting the received data packets belonging to the second stream to user equipment.

Further particular and preferred aspects of the present invention are set out in the accompanying independent and dependent claims. Features of the dependent may be combined with features of the independent claims as appropriate, and in combinations ether than those explicitly set out in the claims.

### BRIEF DESCRIPTION OF THE DRAWINGS

Embodiments of the present invention will now be described further, with reference to the accompanying drawings in which:
Figure 1 illustrates the main components of a telecommunications network according to one embodiment;
Figure 2 illustrates schematically a data processing regime according to a first embodiment; and
Figure 3 illustrates schematically a data processing regime according to a second embodiment.

### DESCRIPTION OF THE EMBODIMENTS

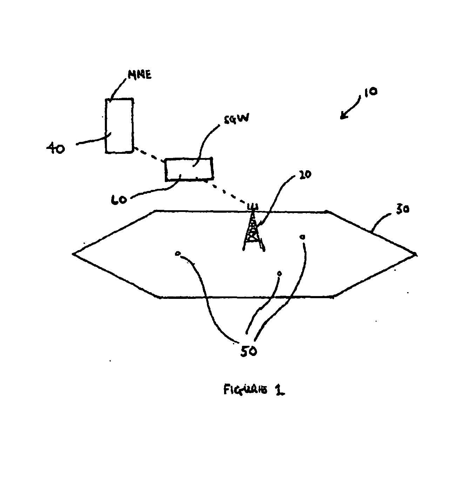

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by Mobility Management Entity (MME). The MME 40 controls operation of the wireless communications system by communicating with a plurality of base stations via Serving Gateways (SGW) 60. The MME also communicates with user equipment 50 via each base station and thus effectively manages the wireless communications system.

MME 40 maintains location information which provides information on the location of user equipment 50 within the wireless communication system 10. The MME is operable to signal to SGW 60 to route data traffic through the telecommunications network, from a core network to user equipment and vice versa.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the MME 40, allocates resource to user equipment in a manner that aims to optimise operation of the wireless telecommunications network 10.

A radio link is a dedicated connection between user equipment 50 and a cell of a base station. These dedicated radio links are formed when user equipment is in an "RRC-Connected" state. When user equipment is not transmitting information such as text messages or voice information to a base station it is in a so-called "RRC-idle" state. When user equipment has information to transmit to a base station it chooses a connected state within which to operate. When in an "RRC-Connected" state user equipment is able to use high speed uplink packet access radio resources to achieve a high uplink throughput.

Movement between sectors provided by a single base station and movement between coverage areas, that is to say movement between base stations whilst user equipment is in an active state are known as "mobility events" or "handover" and are overseen by the MME.

When user equipment is in an active state, data is being sent to a core network via a base station and data is being sent from the core network to user equipment via a base station.

When active user equipment moves from an area served by one base station (a "source" base station) into an area served by another base station (a "target" base station), data packets for that user equipment being streamed from the core network via an Evolved Packet Core (EPC)are no longer sent to the source base station and instead are sent to the target base station. In order to try to ensure all data packets in a data stream reach the intended user equipment, if the source base station is aware that handover is occurring, the source base station operates to forward data packets that it has received from the core network to the target base station. The target base station then acts to send those forwarded data packets to the user equipment once the handover process is complete.

In the target base station there will therefore be two data streams: a forwarded data stream from the source base station and a new data stream from the EPC sent directly to the target base station once handover signalling is complete. The target base station acts to buffer the two data streams until data packet transmission to user equipment by the target base station starts after handover. Once handover to the target base station is complete, the stream of forwarded data packets is processed and transmitted to user equipment, followed by the new data packet stream.

It will be appreciated that to process the two streams most efficiently and with minimal handover interruption to the user equipment, the target base station requires some indication as to when the forwarded data stream has ended so that the delay before commencing transmission of the new data packet stream is minimized.

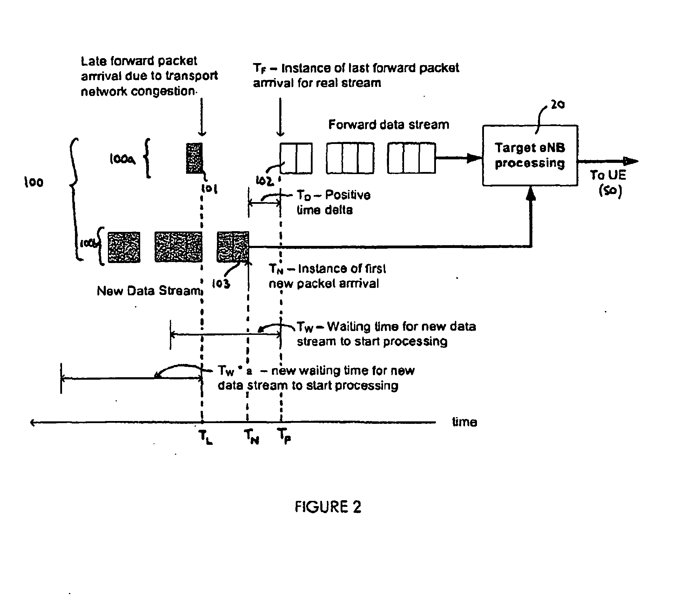

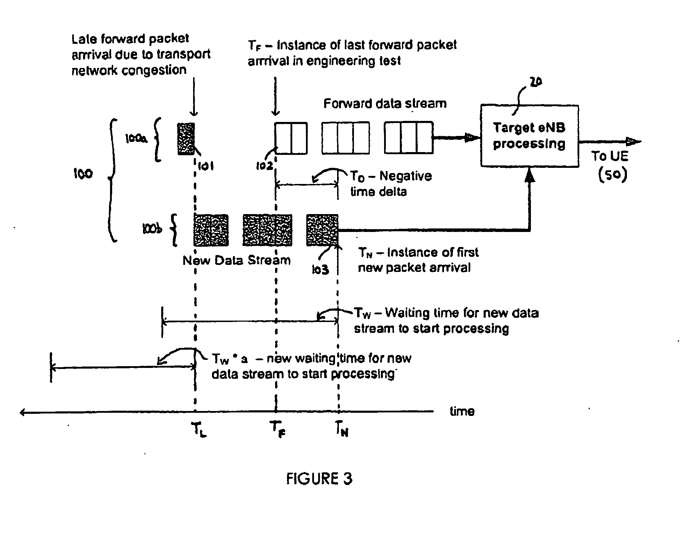

Figure 2 and Figure 3 illustrate schematically a data processing regime according to embodiments for processing a flow of data comprising two data streams at a target base station 20. The flow of data 100 to be transmitted to user equipment 50 by target base station 20 comprises: a forwarded data stream 100a and a new data stream 100b.

Forwarded data stream 100a has originated from a source base station and ideally will be transmitted to user equipment 50 prior to new data stream 100b. It will be appreciated that each data stream 100a, 100b comprises a series of data packets. In the schematic illustrations of Figure 2 and Figure 3, forwarded data stream 100a comprises nine data packets. One of those data packets 101 is delayed in relation to the remainder of those data packets. In particular, it is delayed with respect to the apparent last forwarded packet 102. Analogously, new data stream 100b is shown schematically as comprising seven data packets including a first new packet in the new data stream 103. It will be appreciated that data streams 100a, 100b, may comprise significantly more data packets than those shown in Figures 2 and 3.

At the base of Figure 2 and Figure 3 time is indicated along the negative x-axis. The time at which the last apparent forward packet arrives is indicated as T_{F} on the time axis. The time of arrival of the first data packet 103 in the new data stream 100b is indicated on the time axis as T_{N}. The time of arrival of the late forwarded packet 101 is indicated on the time axis as T_{L}.

Turning now to Figure 2 in particular, in a wireless telecommunications network, the data forwarding and data stream typically follow an established transport path between a source base station and a target base station. As a result, when a new base station is commissioned a typical time difference between a last data packet of a forwarded data stream and the first data packet of a new data stream can be evaluated. That evaluation may be made using a reference number and an engineering approach or by using a constant application data stream test in a normal loaded network. That typical time difference between the last forwarded data packet 102 and the first packet of new data 103 is referred to as a time delta. In Figure 2 that time delta is shown as T_{D} and, since the last packet of the forwarded data stream arrived before the first packet of the new data stream, the time delta is considered to be positive.

In Figure 3 it can be seen that the first packet of the new data stream 103 arrived before the last forward packet in the forwarded data stream 102 and that situation is referred to as having a negative time delta indicated by T_{D} in Figure 3.

Depending on whether the commissioning process indicates that a base station is a positive or negative delta system, the optimum waiting time to operate to end transmission of the forwarded stream and start transmission of the new data stream can be implemented.

Figure 2 relates to a positive delta time system. Often, a forwarded data stream 100a arrives earlier at target base station 20 than new data stream 100b, since the transport network is shared by two data streams and the forwarded stream 100a may typically get preferential delay treatment so that the delay incurred by that stream is shorter. Furthermore, due to enhanced core packet processing delay of a serving gateway change, the new data stream 100b may typically be delayed.

If a base station is operating in a positive delta model, rather than use the positive time delta calculated by the engineering approach adopted during commissioning, it can be fully calculated in each handover case and can be taken as the real time difference between T_{F}, the instance of the last forwarded packet arrival, and T_{N} the instance of first new packet arrival. Target base station processing calculates the real time difference T_{D} by using time stamps attached to those data packets 102, 103.

In a positive delta system, a first waiting time (shown as Tw in Figure 2) is triggered by arrival of the first packet of a new data stream 103 at T_{N}. However, the actual timer runs from arrival of the last forward packet arrival that is to say, from T_{F}. This will always be possible, since in a positive delta system last packet 102 will typically be received before the first packet 103 of the new data stream.

The waiting time applied (T_{w}) will be dependent on the type of data being carried by stream 100, and in particular the flow characteristics of that data stream. The flow characteristics of the data stream may be indicated by a QCI of the data stream.

An analysis of the particular situations that might arise in a positive delata system such as that shown in Figure 2 follows:
(i) If the waiting (buffer) time Tw for the particular data type being carried by data stream 100 is less than or equal to the real difference in time between the last packet of the forward data stream and the first packet of a new data stream, then there is a good chance that the transport network operating between source base station and target base station 20 is operating normally and therefore that the forward stream has finished. As a result since Tw, the waiting time, is triggered from receipt of data packet 102, the new data stream will be processed immediately.
(ii) If the waiting time Tw is greater than T_{D} the real positive time delta in this case, and no new packet 101 is received in the forwarded stream before the waiting time Tw is expired, then that is also a good indication that the forwarded stream has finished. In that instance, the new data stream 100b is processed immediately after waiting time Tw.
(iii) If the waiting time Tw is greater than the real positive time delta T_{D}, and new packet 101 forming part of forwarded stream 100a arrives at target base station 20 before waiting time Tw has expired, then that is indicative of some degree of transport congestion being experienced for forwarded stream 100a. In this instance, the waiting timer shall be restarted when each new packet of the forwarded data stream arrives. The new timer value is scaled using a factor of alpha. That is to say, a new wait time is alpha multiplied the original waiting time. The original waiting time is selected on the basis of data type. Similarly the scaling factor, alpha, may be chosen on the basis of data type being carried by data stream 100. The new timer will be triggered each time a late data packet belonging to the forwarded data stream 100a arrives and the new timer is applied using this scaling factor on the previous wait time. This ensures good convergence or tolerance when the scaling factor has been optimised according to transport network and data type characteristics.

Figure 3 illustrates a negative time delta system. In a negative time delta system the commissioning tests show that it is likely that new data stream 100b is likely to arrive before the final data packet in forwarded data stream 100a. In a negative time delta system rather than using the real delay between the first new packet of data steam 100b and the apparent final data packet of the forwarded data stream 100a, a reference number, calculated during commissioning by use of an engineering approach or otherwise, and based upon the data type carried in the data stream is used.

In the negative time delta system wait time Tw is triggered by the arrival of first packet 103 of new data stream 100b. The actual timer also runs from T_{N}. A series of scenarios that may occur in a negative time delta system are set out below:
(i) If the wait time is chosen to be greater than the delta time T_{D}, then it is indicative that the particular application being carried by the data stream 100 needs or wants minimal delay for the new data stream, even though there could still be data to arrive in the forwarded data stream. In such a case, the new data stream is processed immediately regardless of the forward stream.
(ii) If the wait time (Tw) for the particular type of data carried by the data stream 100 is greater than the expected delta time T_{D} for that data, and there is no new packet 101 received during Tw, it is indicative that the forward stream is likely to have finished and the new data can be processed immediately after wait time Tw.
(iii) If the wait time Tw is greater than the negative time delta T_{D} and a new packet 101 is received in the forwarded data stream 100a during Tw, this is indicative that some degree of transport congestion is being experienced by the forwarded data stream. In that instance, the timer is restarted when each late packet 101 arrives. The new wait time value is scaled using a scaling factor alpha. That is to say, the new time wait time will be alpha multiplied by the original wait time Tw. The new wait time will be triggered for each late forward packet arrival 101 and each time a new timer is applied the scaling factor is used on the previous wait time. Such an arrangement ensures good convergence or tolerance when the scaling factor has been optimised according to transport network characteristics.

In both positive and negative time delta systems as shown in Figure 2 and Figure 3, delta time T_{D}, wait time Tw and scaling factor alpha are allocated on a QCI (quality of service class index) basis rather than being a universal parameter for all data types. QCI is to find as a way to describe possible applications flow characteristics, so that the bearer of that data can be treated accordingly by base stations 20. For example, for QCI 1 and QCI 2, which relate to delay sensitive application flows, packet arrival typically flow a fixed pattern. In particular, for example, a QCI 1 stream has a 20ms interval. As a result delta time is typically set to a value just under this interval, for example, 15ms, and initial wait time Tw can be set at a value just above it for example 25ms: Since the delay sensitive applications are such that packet loss is less important than unnecessary delay scaling factor alpha may be zero such that even if a new data packet is received a base station acts to forward the new data stream straight away and wait no longer.

For other delay sensitive QCI data the wait time can be set conservatively and the scaling factor can be set to be less than one such that they converge quickly allowing the new data stream 100b to be transmitted to user equipment 50 as soon as possible.

For non-delay sensitive data, prevention of packet loss is more important than delay. As a result the wait time can be set to a relatively large number and the scaling factor alpha can be greater than one so that the transport delay or congestion being experienced in a network can be well accommodated.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of processing a flow of data pockets (100) in an inter base station handover process in a wireless telecommunications network (10), said flow of data comprising a first stream of data pockets (100a) to be transmitted to user equipment (50) and a second stream of data packets (100b) to be transmitted to said user equipment (50) after said first stream of data packets, said method comprising the steps of:
receiving data pockets belonging to said first stream (100a);
transmitting said received data pockets belonging to said first stream (100a) to said user equipment (50);
receiving data pockets belonging to said second stream (100b);
waiting for a predetermined buffer period from receipt of a first data packet (103) in said second stream, before transmitting said received data packets belonging to said second stream (100b) to said user equipment
said predetermined buffer period being selected on the basis of flow characteristics of said flow of data packets;
the method being **characterized by** further comprising the steps of
monitoring, during said predetermined buffer period, for receipt of a further data pocket (101) belonging to said first stream (100a);
and, if a further data packet is received.
calculating a new buffer period by multiplying said predetermined buffer period by a scaling factor, said scaling factor being selected based upon flow characteristics of said flow of data packets (100) and waiting said calculated new buffer period from time of receipt of said further data packet (101) before transmitting said received data pockets belonging to said second stream (100b) to said user equipment.

2. A method according to claim 1, further comprising the steps of:
determining on evaluated expected time difference between receipt of a last packet (102) of said first data stream and a first data pocket (103) of said second data stream within said network for said flow of data based upon said flow characteristics: and
setting said predetermined buffer period on the basis of flow characteristics of said flow of data packets and said expected time difference.

3. A method according to claim 2, further comprising the steps of:
comparing said expected time difference with said predetermined buffer period and if said expected time difference is less than said predetermined buffer period, immediately transmitting data packets belonging to said second stream to said user equipment.

4. A method according to any preceding claim, further comprising the steps of:
determining whether there is an expectation that a last pocket (101) of said first data stream will be received before a first data packet (103) of said second data stream: and
setting said predetermined buffer period accordingly.

5. A method according to any one of claims 2 to 4. wherein if there is an expectation that a lost packet (101) of said first data stream will be received before a first data packet (103) of said second data stream, said method further comprises the steps of:
calculating, based on timestamps allocated to the last packet of said first data stream and the first data packet of said second data stream, an actual time difference between the last packet of said first data stream and the first data packet of said second data stream, and using said actual time difference in place of said expected time difference.

6. A method according to any preceding claim, wherein if there is an expectation that a last packet (101) of said first data stream will be received before a first data pocket (103) of said second data stream, said method further comprises the step of:
modifying said step of waiting for a predetermined buffer period to wait for a predetermined buffer period from receipt of a last data packet in said first stream before transmitting said received data packets belonging to said second stream to said user equipment (50).

7. A computer program product operable, when executed on a computer, to perform all the steps of the method according to any one of claims 1 to 6.

8. A network node operable to process a flow of data packets (100) in an inter base station handover process in a wireless telecommunications network (10), said flow of data comprising a first stream of data packets (100a) to be transmitted to user equipment (50) and a second stream of data packets (100b) to be transmitted to said user equipment (50) after said first stream of data packets, said network node comprising:
reception logic operable to receive data pockets (100) belonging to said first stream and said second stream:
transmission logic operable to transmit said received data packets belonging to said first stream and said second stream to said user equipment (50):
processing logic operable to wait for a predetermined buffer period from receipt of a first data packet in said second stream, before transmitting said received data pockets belonging to said second stream to user equipment (50);
said predetermined buffer period being selected on the basis of flow characteristics of said flow of data packets:
the network nocle being **characterized by** further comprising
monitoring logic operable to monitor, during said predetermined buffer period. for receipt of a further data pocket belonging to said first stream (100a);
and,
calculation logic operable. if a further data pocket is received, to calculate a new buffer period by multiplying said predetermined buffer period by a scaling factor. said scaling factor being selected based upon flow characteristics of said flow of do to packets;
wherein said processing logic is operable to wait said calculated new buffer period from time of receipt of said further data pocket before transmitting said received data pockets belonging to said second stream (100b) to said user equipment (50).

9. A network node according to claim 8, further comprising:
determination logic operable to determine on evaluated expected time difference between receipt of a lost packet (102) of said first data stream and a first data pocket (103) of said second data stream within said network for said flow of data based upon said flow characteristics: and
wherein said processing logic is operable to
set said predetermined buffer period on the basis of flow characteristics of said flow of data pockets and said expected time difference.

10. A network node according to claim 9, further comprising:
comparison logic operable to compare said expected time difference with said predetermined buffer period and if said expected time difference is less than said predetermined buffer period, operable to immediately transmit data packets belonging to said second stream to said user equipment.

11. A network node according to anyone of claims 8 to 10, further comprising:
delta determination logic operable to
determine whether there is an expectation that a last packet of said first data stream will be received before a first data packet of said second data stream: and
set said predetermined buffer period accordingly.

## Patentansprüche

1. Verfahren zur Verarbeitung eines Datenpaketflusses (100) in einem Handover-Prozess zwischen Basisstationen in einem drahtlosen Telekommunikationsnetzwerk (10), wobei der besagte Datenfluss einen an ein Benutzerendgerät (50) zu übertragenden ersten Datenpaketstrom (100a) und einen an das besagte Benutzerendgerät (50) nach dem besagten ersten Datenpaketstrom zu übertragenden zweiten Datenpaketstrom (100b) umfasst, wobei das besagte Verfahren die folgenden Schritte umfasst:
Empfangen von Datenpaketen, die dem besagten ersten Strom (100a) angehören;
Übertragen der besagten empfangenen Datenpakete, welche dem besagten ersten Strom (100a) angehören, an das besagte Benutzerendgerät (50);
Empfangen von Datenpaketen, die dem besagten zweiten Strom (100b) angehören;
Warten während einer vorgegebenen Pufferzeit ab dem Empfang eines ersten Datenpakets (103) in dem besagten zweiten Strom, bevor die besagten empfangenen Datenpakete, welche dem besagten zweiten Strom (100b) angehören, an das besagte Benutzerendgerät übertragen werden;
wobei die besagte vorgegebene Pufferzeit auf der Basis von Flusseigenschaften des besagten Datenpaketflusses ausgewählt wird;
wobei das Verfahren **dadurch gekennzeichnet ist, dass** es weiterhin die Schritte des Überwachens, während der besagten vorgegebenen Pufferzeit, des Empfangs eines weiteren Datenpakets (101), welches dem besagten ersten Strom (100a) angehört,
und, wenn ein weiteres Datenpaket empfangen wird,
des Berechnens einer neuen Pufferzeit durch Multiplizieren der besagten vorgegebenen Pufferzeit mit einem Skalierungsfaktor, wobei der besagte Skalierungsfaktor auf der Basis der Flusseigenschaften des besagten Datenpaketflusses (100) ausgewählt wird, und des Wartens während der besagten berechneten neuen Pufferzeit ab dem Zeitpunkt des Empfangs des besagten weiteren Datenpakets (101), bevor die besagten empfangenen Datenpakete, welche dem besagten zweiten Strom (100b) angehören, an das besagte Benutzerendgerät übertragen werden, umfasst.

2. Verfahren nach Anspruch 1, weiterhin die folgenden Schritte umfassend:
Ermitteln einer geschätzten erwarteten Zeitdifferenz zwischen dem Empfang eines letzten Pakets (102) des besagten ersten Datenstroms und eines ersten Datenpakets (103) des besagten zweiten Datenstroms innerhalb des besagten Netzwerks für den besagten Datenfluss auf der Basis der besagten Flusseigenschaften; und
Einstellen der besagten vorgegebenen Pufferzeit auf der Basis der Flusseigenschaften des besagten Datenpaketflusses und der besagten erwarteten Zeitdifferenz.

3. Verfahren nach Anspruch 2, weiterhin die folgenden Schritte umfassend:
Vergleichen der besagten erwarteten Zeitdifferenz mit der besagten vorgegebenen Pufferzeit, und wenn die besagte Zeitdifferenz niedriger als die besagte vorgegebene Pufferzeit ist, sofortiges Übertragen der Datenpakete, die dem besagten zweiten Strom angehören, an das besagte Benutzerendgerät.

4. Verfahren nach einem beliebigen der vorstehenden Ansprüche, weiterhin die folgenden Schritte umfassend:
Ermitteln, ob zu erwarten ist, dass ein letztes Paket (101) des besagten ersten Datenstroms vor einem ersten Datenpaket (103) des besagten zweiten Datenstroms empfangen wird; und
dementsprechendes Einstellen der besagten vorgegebenen Pufferzeit.

5. Verfahren nach einem beliebigen der Ansprüche 2 bis 4, wobei, wenn zu erwarten ist, dass ein letztes Paket (101) des besagten ersten Datenstroms vor einem ersten Datenpaket (103) des besagten zweiten Datenstroms empfangen wird, das besagte Verfahren weiterhin die folgenden Schritte umfasst:
Berechnen, auf der Basis von dem letzten Paket des besagten ersten Datenstroms und dem ersten Datenpaket des besagten zweiten Datenstroms zugeteilten Zeitstempein, einer effektiven Zeitdifferenz zwischen dem letzten Paket des besagten ersten Datenstroms und dem ersten Datenpaket des besagten zweiten Datenstroms, und Verwenden der besagten effektiven Zeitdifferenz anstelle der besagten erwarteten Zeitdifferenz.

6. Verfahren nach einem beliebigen der vorstehenden Ansprüche, wobei, wenn zu erwarten ist, dass ein letztes Paket (101) des besagten ersten Datenstroms vor einem ersten Datenpaket (103) des besagten zweiten Datenstroms empfangen wird, das Verfahren weiterhin den folgenden Schritt umfasst:
Modifizieren des besagten Schritts des Wartens während einer vorgegebenen Pufferzeit ab dem Empfang eines letzten Datenpakets in dem besagten ersten Strom, bevor die besagten empfangenen Datenpakete, welche dem besagten zweiten Strom angehören, an das Benutzerendgerät (50) übertragen werden.

7. Computerprogramm-Produkt, welches bei dessen Ausführen auf einem Computer betriebsfähig ist, um alle Schritte des Verfahrens gemäß einem beliebigen der Ansprüche 1 bis 6 durchzuführen.

8. Netzwerkknoten, welcher betriebsfähig ist, um einen Datenpaketfluss (100) in einem Handover-Prozess zwischen Basisstationen in einem drahtlosen Telekommunikationsnetzwerk (10) zu verarbeiten, wobei der besagte Datenfluss einen an ein Benutzerendgerät (50) zu übertragenden ersten Datenpaketstrom (100a) und einen an das besagte Benutzerendgerät (50) nach dem besagten ersten Datenpaketstrom zu übertragenden zweiten Datenpaketstrom (100b) umfasst, wobei der besagte Netzwerkknoten umfasst:
Empfangslogik, welche betriebsfähig ist, um Datenpakete (100), die dem besagten ersten Strom und dem besagten zweiten Strom angehören, zu empfangen;
Übertragungslogik, welche betriebsfähig ist, um die besagten empfangenen Datenpakete, die dem besagten ersten und dem besagten zweiten Strom angehören, an das besagte Benutzerendgerät (50) zu übertragen;
Verarbeitungslogik, welche betriebsfähig ist, um während einer vorgegebenen Pufferzeit ab dem Empfang eines ersten Datenpakets in dem besagten zweiten Strom zu warten, bevor die besagten empfangenen Datenpakete, die dem besagten zweiten Strom angehören, an das Benutzerendgerät (50) übertragen werden;
wobei die besagte vorgegebene Pufferzeit auf der Basis der Flusseigenschaften des besagten Datenpaketflusses ausgewählt wird;
wobei der Netzwerkknoten **dadurch gekennzeichnet ist, dass** er weiterhin eine Überwachungslogik umfasst, welche betriebsfähig ist, um während der besagten vorgegebenen Pufferzeit den Empfang eines weiteren Datenpakets, welches dem besagten ersten Strom (100a) angehört, zu überwachen;
und,
Rechenlogik, welche betriebsfähig ist, um, wenn ein weiteres Datenpaket empfangen wird, eine neue Pufferzeit durch Multiplizieren der besagten vorgegebenen Pufferzeit mit einem Skalierungsfaktor zu berechnen, wobei der besagte Skalierungsfaktor auf der Basis der Flusseigenschaften des besagten Datenpaketflusses ausgewählt wird;
wobei die besagte Verarbeitungslogik betriebsfähig ist, um während der besagten berechneten neuen Pufferzeit ab dem Zeitpunkt des Empfangs des besagten weiteren Datenpakets zu warten, bevor die besagten empfangenen Datenpakete, die dem besagten zweiten Strom (100b) angehören, an das besagte Benutzerendgerät (50) übertragen werden.

9. Netzwerkknoten nach Anspruch 8, weiterhin umfassend:
Ermittlungslogik, welche betriebsfähig ist, um eine geschätzte erwartete Zeitdifferenz zwischen dem Empfang eines letzten Pakets (102) des besagten ersten Datenstroms und eines ersten Datenpakets (103) des besagten zweiten Datenstroms innerhalb des besagten Netzwerk für den besagten Datenfluss auf der Basis der besagten Flusseigenschaften zu ermitteln; und
wobei die besagte Verarbeitungslogik betriebsfähig ist, um die besagte vorgegebene Pufferzeit auf der Basis der Flusseigenschaften des besagten Datenpaketflusses und der besagten erwarteten Zeitdifferenz einzustellen.

10. Netzwerkknoten nach Anspruch 9, weiterhin umfassend:
Vergleichslogik, welche betriebsfähig ist, um die besagte erwartete Zeitdifferenz mit der besagten vorgegebenen Pufferzeit zu vergleichen und, wenn die besagte erwartete Zeitdifferenz niedriger ist als die besagte vorgegebene Pufferzeit, betriebsfähig ist, um Datenpakete, die dem besagten zweiten Strom angehören, unverzüglich an das besagte Benutzerendgerät zu übertragen.

11. Netzwerkknoten nach einem beliebigen der Ansprüche 8 bis 10, weiterhin umfassend:
Deltaermittlungslogik, welche betriebsfähig ist, um
zu ermitteln, ob zu erwarten ist, dass ein letztes Paket des besagten ersten Datenstroms vor einem ersten Datenpaket des besagten zweiten Datenstroms empfangen wird; und
die besagte Pufferzeit dementsprechend einzustellen.

## Revendications

1. Procédé de traitement d'un flux de paquets de données (100) dans un processus de transfert entre stations de base dans un réseau de télécommunication sans fil (10), ledit flux de données comprenant un premier flux de paquets de données (100a) à transmettre à l'équipement d'utilisateur (50) et un deuxième flux de paquets de données (100b) à transmettre audit équipement d'utilisateur (50) après ledit premier flux de paquets de données, ledit procédé comprenant les étapes suivantes :
recevoir des paquets de données appartenant audit premier flux (100a) ;
transmettre lesdits paquets de données reçus appartenant audit premier flux (100a) audit équipement d'utilisateur (50) ;
recevoir des paquets de données appartenant audit deuxième flux (100b) ;
attendre pendant une période tampon prédéterminée à compter de la réception d'un premier paquet de données (103) dans ledit deuxième flux, avant la transmission desdits paquets de données reçus appartenant audit deuxième flux (100b) audit équipement d'utilisateur
ladite période tampon prédéterminée étant choisie sur la base de caractéristiques de flux dudit flux de paquets de données :
le procédé étant **caractérisé en ce qu'**il comprend en outre les étapes suivantes :
surveiller, durant ladite période tampon prédéterminée, la réception d'un autre paquet de données (101) appartenant audit premier flux (100a) :
et, si un autre paquet de données est reçu,
calculer une nouvelle période tampon en multipliant ladite période tampon prédéterminée par un facteur d'échelle, ledit facteur d'échelle étant choisi sur la base de caractéristiques de flux dudit flux de paquets de données (100) et attendre pendant ladite nouvelle période tampon calculée à compter de l'instant de réception dudit autre paquet de données (101) avant la transmission desdits paquets de données reçus appartenant audit deuxième flux (100b) audit équipement d'utilisateur.

2. Procédé selon la revendication 1, comprenant en outre les étapes suivantes :
déterminer une différence de temps prévue évaluée entre la réception d'un dernier paquet (102) dudit premier flux de données et d'un premier paquet de données (103) dudit deuxième flux de données à l'intérieur dudit réseau pour ledit flux de données sur la base desdites caractéristiques de flux ; et
définir ladite période tampon prédéterminée sur la base de caractéristiques de flux dudit flux de paquets de données et de ladite différence de temps prévue.

3. Procédé selon la revendication 2, comprenant en outre les étapes suivantes :
comparer ladite différence de temps prévue à ladite période tampon prédéterminée et si ladite différence de temps est inférieure à ladite période tampon prédéterminée, transmettre immédiatement les paquets de données appartenant audit deuxième flux audit équipement d'utilisateur,

4. Procédé selon l'une quelconque des revendications précédentes, comprenant en outre les étapes suivantes :
déterminer si l'on prévoit qu'un dernier paquet (101) dudit premier flux de données sera reçu avant un premier paquet de données (103) dudit deuxième flux de données ; et
définir ladite période tampon prédéterminée en conséquence.

5. Procédé selon l'une quelconque des revendications 2 à 4, dans lequel si l'on prévoit qu'un dernier paquet (101) dudit premier flux de données sera reçu avant un premier paquet de données (103) dudit deuxième flux de données, ledit procédé comprend en outre les étapes suivantes _{:}
calculer, sur la base d'estampilles temporelles allouées au dernier paquet dudit premier flux de données et au premier paquet de données dudit deuxième flux de données, une différence de temps réelle entre le dernier paquet dudit premier flux de données et le premier paquet de données dudit deuxième flux de données, et utiliser ladite différence de temps réelle à la place de ladite différence de temps prévue.

6. Procédé selon l'une quelconque des revendications précédentes, dans lequel si l'on prévoit qu'un dernier paquet (101) dudit premier flux de données sera reçu avant un premier paquet de données (103) dudit deuxième flux de données, ledit procédé comprend en outre l'étape suivante :
modifier ladite étape d'attente pendant une période tampon prédéterminée pour attendre pendant une période tampon prédéterminée à compter de la réception d'un dernier paquet de données dans ledit premier flux avant la transmission desdits paquets de données reçus appartenant audit deuxième flux audit équipement d'utilisateur (50).

7. Produit de programme informatique permettant, lorsqu'il est exécuté sur un ordinateur, d'exécuter toutes les étapes du procédé selon l'une quelconque des revendications 1 à 6.

8. Noeud de réseau permettant de traiter un flux de paquets de données (100) dans un processus de transfert entre stations de base dans un réseau de télécommunication sans fil (10), ledit flux de données comprenant un premier flux de paquets de données (100a) à transmettre à l'équipement d'utilisateur (50) et un deuxième flux de paquets de données (100b) à transmettre audit équipement d'utilisateur (50) après ledit premier flux de paquets de données, ledit noeud de réseau comprenant :
une logique de réception permettant de recevoir des paquets de données (100) appartenant audit premier flux et audit deuxième flux ;
une logique de transmission permettant de transmettre lesdits paquets de données reçus appartenant audit premier flux et audit deuxième flux audit équipement d'utilisateur (50) ;
une logique de traitement permettant d'attendre pendant une période tampon prédéterminée à compter de la réception d'un premier paquet de données dans ledit deuxième flux, avant la transmission desdits paquets de données reçus appartenant audit deuxième flux à l'équipement d'utilisateur (50) ;
ladite période tampon prédéterminée étant choisie sur la base de caractéristiques de flux dudit flux de paquets de données :
le noeud de réseau étant **caractérisé en ce qu'**il comprend en outre :
une logique de surveillance permettant de surveiller, durant ladite période tampon prédéterminée, la réception d'un autre paquet de données appartenant audit premier flux (100a) ;
et,
une logique de calcul permettant, si un autre paquet de données est reçu, de calculer une nouvelle période tampon en multipliant ladite période tampon prédéterminée par un facteur d'échelle, ledit facteur d'échelle étant choisi sur la base de caractéristiques de flux dudit flux de paquets de données ;
dans lequel ladite logique de traitement permet d'attendre pendant ladite nouvelle période tampon calculée à compter de l'instant de réception dudit autre paquet de données avant la transmission desdits paquets de données reçus appartenant audit deuxième flux (100b) audit équipement d'utilisateur (50).

9. Noeud de réseau selon la revendication 8, comprenant en outre :
une logique de détermination permettant de déterminer une différence de temps prévue évaluée entre la réception d'un dernier paquet (102) dudit premier flux de données et d'un premier paquet de données (103) dudit deuxième flux de données à l'intérieur dudit réseau pour ledit flux de données sur la base desdites caractéristiques de flux ; et
dans lequel ladite logique de traitement permet de :
définir ladite période tampon prédéterminée sur la base de caractéristiques de flux dudit flux de paquets de données et de ladite différence de temps prévue.

10. Noeud de réseau selon la revendication 9, comprenant en outre :
une logique de comparaison permettant de comparer ladite différence de temps prévue à ladite période tampon prédéterminée et si ladite différence de temps prévue est inférieure à ladite période tampon prédéterminée, elle permet de transmettre immédiatement des paquets de données appartenant audit deuxième flux audit équipement d'utilisateur.

11. Noeud de réseau selon l'une quelconque des revendications 8 à 10, comprenant en outre :
une logique de détermination delta permettant de :
déterminer si l'on prévoit qu'un dernier paquet dudit premier flux de données sera reçu avant un premier paquet de données dudit deuxième flux de données ; et
définir ladite période tampon prédéterminée en conséquence.
